# EUROPEAN PATENT APPLICATION

(11) **EP 4 501 109 A1**
(43) Date of publication of application: **05.02.2025**
(21) Application number: 22935106.9
(22) Date of filing: 29.03.2022
(51) Int. Cl.: A01M 7/00, A01C 11/00

(54) **WORK ASSISTING SYSTEM**

(71) Applicant: Kubota Corporation, Osaka 556-8601 (JP)
(72) Inventor: SAKAGUCHI Kazuo, Amagasaki-shi, Hyogo 661-0967 (JP); SEINO Kohei, Amagasaki-shi, Hyogo 661-0967 (JP); ISHIKAWA Naohiro, Amagasaki-shi, Hyogo 661-0967 (JP); TAKAHASHI Yusuke, Amagasaki-shi, Hyogo 661-0967 (JP); KONDO Kanako, Amagasaki-shi, Hyogo 661-0967 (JP); MASUMOTO Tadahisa, Amagasaki-shi, Hyogo 661-0967 (JP)
(74) Representative: Müller-Boré & Partner Patentanwälte PartG mbB
(86) International application number: PCT/JP2022/015271
(87) International publication number: WO 2023/187953

(57) **Abstract**

A work assisting system for assisting with work performed by a work vehicle (E) includes a flying body (G) including a flying apparatus (H) capable of flying and transporting a work-related article related to the work performed by the work vehicle (E), and a transfer section (K) connected to the flying apparatus (H). The transfer section (K) is configured to transfer the work-related article between the flying body (G) and the work vehicle (E).

## Description

### Technical Field

The present invention relates to a work assisting system for assisting with work performed by a work vehicle.

### Background Art

A work vehicle described in Patent Literature 1 has been already known as a work vehicle, for example. The work vehicle (a "riding management machine" in Patent Literature 1) can perform a chemical spraying operation by a work device (a "chemical spraying device" in Patent Literature 1).

### Citation List

### Patent Literature

Patent Literature 1: Japanese Unexamined Patent Application Publication No. 2021-6006

### Summary of Invention

### Technical Problem

In a case where the work vehicle for spraying a material (for example, a chemical agent) like the work vehicle described in Patent Literature 1 works in a relatively wide area, the work vehicle tends to require supply of the material in the middle of the work. The supply of the material is performed in a material supply station after the work vehicle is moved to the material supply station, for example. This causes a delay in the work. As a result, working efficiency tends to decrease.

Further, in a case where a work vehicle for harvesting crops or the like, for example, works in a relatively wide area, the work vehicle tends to require discharge of the crops in the middle of the work. The discharge of the crops is performed in a crop discharge area after the work vehicle is moved to the crop discharge area, for example. This causes a delay in the work. As a result, working efficiency tends to decrease.

In a case where the work vehicle works in a relatively wide area, the work vehicle may require replacement of a component in the middle of the work. The replacement of the component is performed in a maintenance operations area after the work vehicle is moved to the maintenance operation area, for example. This causes a delay in the work. As a result, working efficiency tends to decrease.

In a case where the work vehicle works in a relatively large area as such, a delay may be caused in the work due to transfer of a work-related article related to the work performed by the work vehicle. As a result, working efficiency tends to decrease.

Note that, in the present specification, material, crops, and component are all concrete examples of "the work-related article." In addition, chemical agent, fertilizer, seedling, seedling mat, seed, and fuel are all concrete examples of the "material."

In the present specification, supply, discharge, collection, attachment, and detachment are all concrete examples of the "transfer."

An object of the present invention is to provide a work assisting system that can easily restrain a decrease in working efficiency due to the transfer of a work-related article.

### Solution to Problem

A feature of the present invention is a work assisting system for assisting with work performed by a work vehicle, and the work assisting system includes at least one flying body including a flying apparatus capable of flying and transporting a work-related article related to the work performed by the work vehicle, and a transfer section connected to the flying apparatus. The transfer section is configured to transfer the work-related article between the at least one flying body and the work vehicle.

With this configuration, the flying body can approach the work vehicle while transporting the work-related article and transfer the work-related article. Hereby, the flying body easily transfers the work-related article while the work vehicle continues its work or while the work vehicle temporarily stops in a farm for the purpose of the transfer. As a result, it is possible to restrain a decrease in working efficiency due to the transfer of the work-related article.

That is, with this configuration, it is possible to achieve a work assisting system that can easily restrain a decrease in working efficiency due to the transfer of a work-related article.

In the present invention, it is preferable that: the work assisting system further include a flight control section configured to control flight of the at least one flying body; the flight control section be able to perform a maintaining control to control the flight of the at least one flying body in such a manner as to maintain a positional relationship between the work vehicle and the at least one flying body, during the work performed by the work vehicle; and the transfer section be configured to transfer the work-related article during execution of the maintaining control.

With this configuration, the flying body can transfer the work-related article while the positional relationship between the work vehicle and the flying body is maintained. Hereby, the work-related article is easily stably transferred while the work vehicle is traveling and performing the work.

In the present invention, it is preferable that: the work assisting system further include a flight control section configured to control flight of the at least one flying body; the flight control section be able to control the flight of the at least one flying body in such a manner as to cause the at least one flying body to land on the work vehicle, during the work performed by the work vehicle; and the transfer section be configured to transfer the work-related article after the at least one flying body lands on the work vehicle.

With this configuration, the work-related article can be transferred with the flying body being on the work vehicle. Hereby, the work-related article is easily stably transferred while the work vehicle is traveling and performing the work.

In the present invention, it is preferable that: the work vehicle include a reservoir configured to retain the work-related article; the reservoir have an opening facing upward; and the transfer section be configured to supply the reservoir with the work-related article from the at least one flying body by throwing down the work-related article to the opening from above the opening.

With this configuration, even when the transfer section has a relatively simple structure, the work-related article is easily surely supplied. Hereby, the manufacturing cost of the transfer section is easily reduced.

In the present invention, it is preferable that: the work vehicle include a reservoir configured to retain the work-related article; the transfer section include a tubular member; the tubular member allow the work-related article to pass through the tubular member; and the transfer section be configured to transfer the work-related article between the at least one flying body and the reservoir through the tubular member.

With this configuration, the work-related article is transferred through the tubular member. Hereby, the work-related article is easily stably transferred.

In the present invention, it is preferable that: the transfer section include a gripper driven by an actuator and configured to grip the work-related article, a support member supporting the work-related article, or a storage member configured to store the work-related article; and the transfer section be configured to transfer the work-related article by the gripper.

With this configuration, the transfer section is easily configured to transfer various work-related articles. Hereby, it is possible to easily achieve a work assisting system that can transfer various work-related articles.

In the present invention, it is preferable that: the work vehicle be configured to use the work-related article attached to the work vehicle; and the transfer section be configured to transfer the work-related article in such a manner as to detach the work-related article attached to the work vehicle and to attach another work-related article to the work vehicle.

With this configuration, it is possible to achieve a work assisting system that can replace an old work-related article attached to the work vehicle with a new work-related article, for example.

In the present invention, it is preferable that: the work vehicle include a reservoir configured to retain the work-related article; and the transfer section be configured to transfer the work-related article in such a manner as to detach the reservoir from the work vehicle and to attach another reservoir to the work vehicle.

With this configuration, in a case where the work vehicle includes a reservoir configured to retain a material (an example of the work-related article), for example, the reservoir of the work vehicle which reservoir runs out of the material can be replaced with a reservoir filled with the material.

With this configuration, in a case where the work vehicle includes a reservoir configured to retain crops (an example of the work-related article), for example, the reservoir of the work vehicle which reservoir is filled with the crops can be replaced with an empty reservoir.

In the present invention, it is preferable that: the work assisting system include a weight value acquisition section configured to acquire a weight value indicative of a weight of the work-related article before the work-related article is transferred; and the transfer section be configured to, in a case where the weight value is larger than a predetermined threshold, transfer the work-related article by an amount equal to or less than an amount corresponding to the threshold, out of the work-related article before the transfer.

With this configuration, since the threshold is determined appropriately, it is possible to avoid such a situation that a load on the transfer section or the flying body which load is caused due to the weight of the work-related article exceeds a maximum load determined in the specification.

In the present invention, it is preferable that: the at least one flying body include a plurality of flying bodies; and the work assisting system further include a weight value acquisition section configured to acquire a weight value indicative of a weight of the work-related article before the work-related article is transferred, and a flying body determination section configured to determine a flying body suitable for the transfer of the work-related article from among the plurality of flying bodies based on the weight value.

With this configuration, it is possible to easily achieve a work assisting system in which the work-related article is transferred by a suitable flying body based on the weight of the work-related article.

In the present invention, it is preferable that: the transfer section be connected to the flying apparatus in such a manner as to be detachable from the flying apparatus; and the flying apparatus be configured to replace the transfer section connected to the flying apparatus with a transfer section of another type.

With this configuration, the transfer section is replaced with a transfer section of another type, so that a work-related article of another type can be transferred. Hereby, it is possible to easily achieve a work assisting system that can transfer various work-related articles.

In the present invention, it is preferable that: the at least one flying body include a plurality of flying bodies including respective transfer sections of different types; and the work assisting system further include an acquisition section configured to acquire a requested assist detail, and a determination section configured to determine a flying body suitable for the transfer of the work-related article from among the plurality of flying bodies based on an acquisition result acquired by the acquisition section.

With this configuration, the flying bodies are easily configured to transfer respective work-related articles of different types. Hereby, it is possible to easily achieve a work assisting system that can transfer various work-related articles.

### Brief Description of Drawings

Fig. 1 is a general drawing of a work assisting system;
Fig. 2 is a view illustrating supply of a chemical agent and fuel;
Fig. 3 is a block diagram illustrating the configuration of the work assisting system;
Fig. 4 is a view illustrating replacement of a battery;
Fig. 5 is a view illustrating replacement of the battery;
Fig. 6 is a view illustrating supply of a seedling mat; and
Fig. 7 is a block diagram illustrating the configuration of the work assisting system.

### Description of Embodiments

### [Overall Configuration of Work Assisting System]

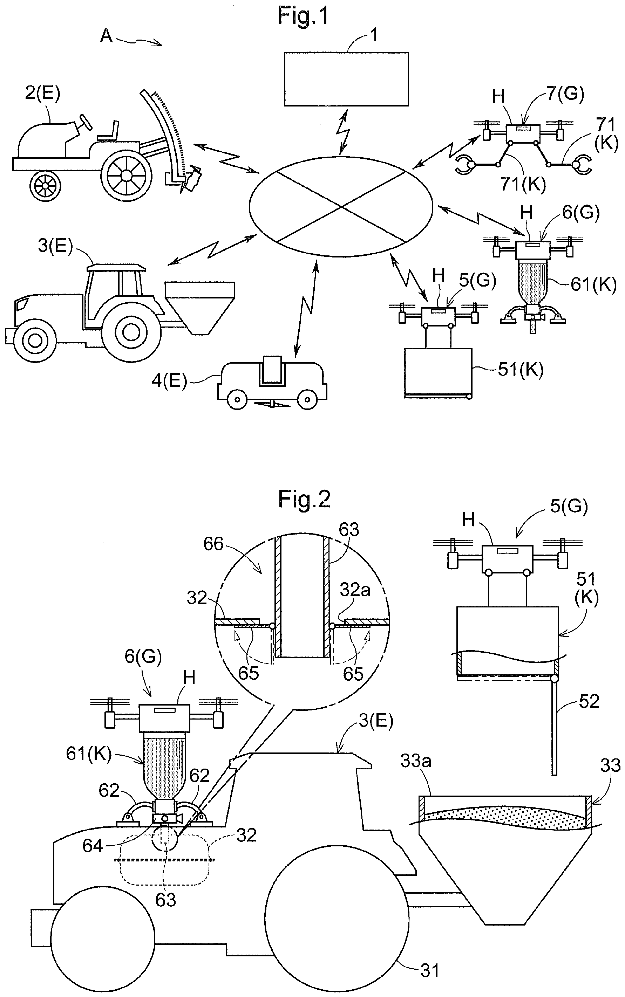

As illustrated in Fig. 1, a work assisting system A in the present embodiment includes a management computer 1, a plurality of work vehicles E, and a plurality of flying bodies G.

However, the present invention is not limited to this, and the work assisting system A may not include the plurality of work vehicles E.

Each work vehicle E in the present embodiment performs work in a farm. However, the present invention is not limited to this. The work vehicle E may be a vehicle performing work in a place other than the farm.

The work assisting system A is configured to assist with work performed by each work vehicle E with use of the plurality of flying bodies G. That is, the work assisting system A is a system for assisting with work performed by the work vehicle E. The work assisting system A also includes the plurality of flying bodies G.

In the present embodiment, the plurality of work vehicles E includes a rice transplanter 2, a tractor 3, and a mower 4. The plurality of flying body G includes a first flying body 5, a second flying body 6, and a third flying body 7. Each flying body G is a multicopter. However, the present invention is not limited to this, and the flying body G may not be a multicopter, provided that the flying body G can fly.

As illustrated in Figs. 1, 2, the flying bodies G include respective flying apparatus H having the same configuration. The flying bodies G also include respective transfer sections K of different types.

The flying apparatus H includes a plurality of propellers or the like, for example, so that the flying apparatus H can fly. The flying apparatus H can transport a work-related article. The work-related article is an article related to work performed by the work vehicle E.

The transfer section K is configured to transfer the work-related article between the flying body G and the work vehicle E. The transfer section K is connected to a lower portion of the flying apparatus H.

That is, the work assisting system A includes the flying body G including the flying apparatus H capable of flying and transporting the work-related article related to the work performed by the work vehicle E, and the transfer section K connected to the flying apparatus H.

### [Supply of Chemical Agent to Hopper]

As illustrated in Fig. 2, the tractor 3 as the work vehicle E includes a travel device 31 and a fuel tank 32 (corresponding to a "reservoir" according to the present invention). More specifically, the travel device 31 is a wheel. Fuel (corresponding to the "work-related article" according to the present invention) is retained in the fuel tank 32.

That is, the tractor 3 includes the fuel tank 32 configured to retain fuel.

The tractor 3 also includes a hopper 33 (corresponding to the "reservoir" according to the present invention). A chemical agent (corresponding to the "work-related article" according to the present invention) is retained in the hopper 33.

That is, the tractor 3 includes the hopper 33 configured to retain a chemical agent.

The tractor 3 includes an engine (not illustrated) driven by fuel. The travel device 31 is driven by power output from this engine, and the chemical agent is sprayed downward from the hopper 33. Hereby, the tractor 3 travels by the travel device 31 and sprays the chemical agent from the hopper 33 in a farm, for example.

The hopper 33 has an opening 33a facing upward.

As illustrated in Fig. 2, the first flying body 5 includes a throwing section 51 as the transfer section K. The throwing section 51 is connected to the flying apparatus H via wires. The throwing section 51 has a box shape and can store the chemical agent.

When the flying apparatus H flies with the chemical agent being stored in the throwing section 51, the flying apparatus H can transport the chemical agent.

The throwing section 51 has a lower end portion provided with an opening-closing section 52. The opening-closing section 52 is configured to be openable and closable by an electric motor or the like, for example. As illustrated in Fig. 2, when the opening-closing section 52 is opened with the throwing section 51 being placed above the opening 33a, the chemical agent stored in the throwing section 51 is thrown down to the opening 33a. Hereby, the hopper 33 is supplied with the chemical agent.

That is, the transfer section K of the first flying body 5 is configured to supply the hopper 33 with the chemical agent from the first flying body 5 by throwing the chemical agent down to the opening 33a from above the opening 33a.

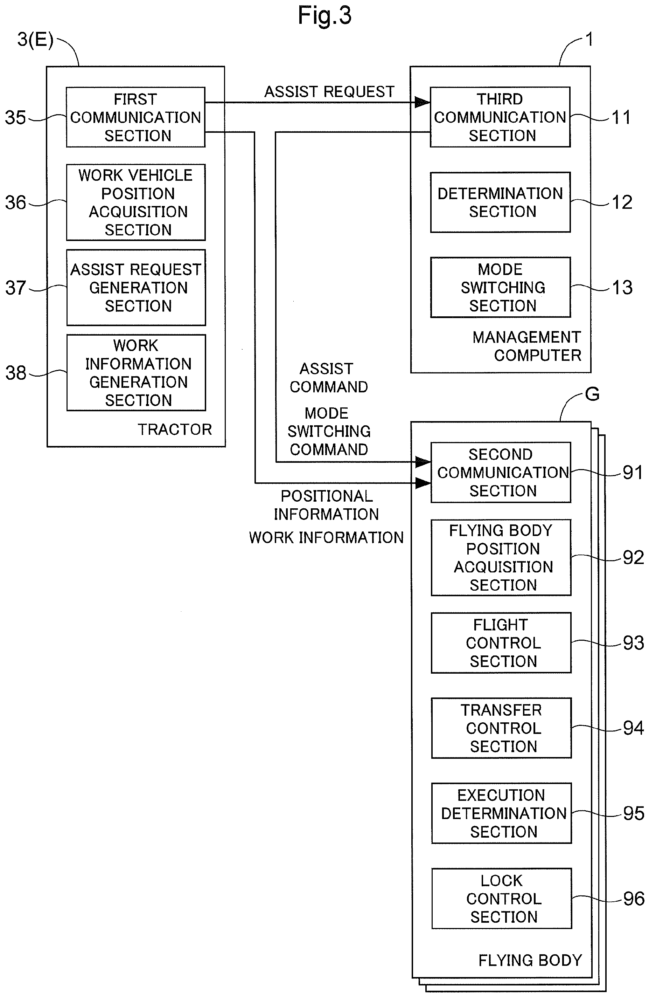

As illustrated in Fig. 3, the tractor 3 includes a first communication section 35. Note that each work vehicle E other than the tractor 3 also includes the first communication section 35. Each flying body G includes a second communication section 91. The management computer 1 includes a third communication section 11 (corresponding to an "acquisition section" according to the present invention).

The first communication section 35, the second communication section 91, and the third communication section 11 are configured to be communicable to each other by the Internet, short-distance wireless communications, or the like, for example. Accordingly, as illustrated in Fig. 1, each work vehicle E, each flying body G, and the management computer 1 are communicably connected to each other.

As illustrated in Fig. 3, the tractor 3 includes a work vehicle position acquisition section 36 and an assist request generation section 37. The work vehicle position acquisition section 36 includes a satellite positioning device configured to receive a GPS signal from an artificial satellite used for a GPS (global positioning system). The work vehicle position acquisition section 36 calculates position coordinates of the tractor 3 based on the received GPS signal over time. Hereby, the work vehicle position acquisition section 36 acquires positional information on the tractor 3.

Note that the present invention is not limited to this. The work vehicle position acquisition section 36 may not use the GPS. For example, the work vehicle position acquisition section 36 may use a GNSS (GLONASS, Galileo, Michibiki, BeiDou, or the like) other than the GPS.

The assist request generation section 37 generates an assist request based on a state of the tractor 3 which state is related to the work-related article. The assist request is a signal indicative of an assist detail requested for the work performed by the work vehicle E. For example, the assist request generation section 37 generates an assist request to request supply of the chemical agent based on the residual amount of the chemical agent retained in the hopper 33. More specifically, when the chemical agent retained in the hopper 33 decreases, the assist request generation section 37 may generate an assist request to request supply of the chemical agent.

The tractor 3 also includes a work information generation section 38. The work information generation section 38 generates work information. The work information is information on the work-related article. The work information may be information indicative of the residual amount of the chemical agent retained in the hopper 33, may be information indicative of the residual amount of fuel retained in the fuel tank 32, or may be information indicative of a necessary amount of the chemical agent or the fuel required until completion of the work, for example. The information indicative of the residual amount of the chemical agent retained in the hopper 33 may be a distance by which the tractor 3 travels, for example. In a case where the amount of the chemical agent to be sprayed by the tractor 3 per unit travel distance is known, the residual amount of the chemical agent retained in the hopper 33 can be calculated based on the distance by which the tractor 3 travels.

Note that each work vehicle E other than the tractor 3 also includes the work vehicle position acquisition section 36, the assist request generation section 37, and the work information generation section 38.

Each flying body G includes a flying body position acquisition section 92, a flight control section 93, and a transfer control section 94.

The flying body position acquisition section 92 has a configuration similar to that of the work vehicle position acquisition section 36. Hereby, the flying body position acquisition section 92 acquires positional information on the flying body G.

The flight control section 93 controls flight of the flying body G by controlling the flying apparatus H based on the positional information acquired by the flying body position acquisition section 92. That is, the work assisting system A includes the flight control section 93 configured to control flight of the flying body G.

The transfer control section 94 controls the transfer section K. For example, the transfer control section 94 of the first flying body 5 controls opening and closing of the opening-closing section 52.

As illustrated in Figs. 3, the first communication section 35 of the tractor 3 transmits the assist request generated by the assist request generation section 37 to the third communication section 11. Hereby, the third communication section 11 acquires an assist detail requested for the work performed by the work vehicle E.

That is, the work assisting system A includes the third communication section 11 configured to acquire the requested assist detail.

As illustrated in Fig. 3, the management computer 1 includes a determination section 12. The determination section 12 determines a flying body G suitable for the transfer of the work-related article from among a plurality of flying bodies G based on the assist request acquired by the third communication section 11.

That is, the work assisting system A includes the determination section 12 configured to determine a flying body G suitable for the transfer of the work-related article from among the plurality of flying bodies G based on an acquisition result acquired by the third communication section 11.

The third communication section 11 transmits an assist command to the second communication section 91 of the flying body G determined by the determination section 12. The second communication section 91 of the flying body G which second communication section 91 has received the assist command acquires positional information on a target work vehicle and work information on the target work vehicle from the first communication section 35 of the target work vehicle as the work vehicle E that has transmitted the assist request to the management computer 1. Note that the positional information is information acquired by the work vehicle position acquisition section 36 of the target work vehicle. The work information is information generated by the work information generation section 38 of the target work vehicle. The flying body G that has received the assist command transfers the work-related article to or from the target work vehicle based on the positional information on the flying body G, the positional information on the target work vehicle, and the work information on the target work vehicle.

For example, in a case where the tractor 3 transmits an assist request for supply of the chemical agent to the management computer 1, the determination section 12 determines the first flying body 5 as a flying body G for supplying the chemical agent. The first flying body 5 that has received the assist command flies toward the tractor 3 through control by the flight control section 93 based on the positional information on the first flying body 5 and the positional information on the tractor 3. The first flying body 5 supplies the hopper 33 with the chemical agent through control by the transfer control section 94 based on the work information on the tractor 3. Note that, in this case, for example, the work information may be information indicative of the residual amount of the chemical agent retained in the hopper 33, and the throwing section 51 of the first flying body 5 may supply the chemical agent to a maximum retention amount in the specification of the hopper 33 based on the residual amount.

Thus, the flying body G includes the second communication section 91 configured to acquire the work information as information on the work-related article. The flying body G also transfers the work-related article by the transfer section K based on the work information.

### [Maintaining Control]

Each flying body G is configured to transfer the work-related article while the work vehicle E is traveling and performing its work. In order to achieve the transfer of the work-related article while the work vehicle E is traveling and performing the work, the flight control section 93 illustrated in Fig. 3 is configured to perform a maintaining control based on the positional information on the work vehicle E and the positional information on the flying body G during the work performed by the work vehicle E. The maintaining control is to control flight of the flying body G in a such a manner as to maintain the positional relationship between the work vehicle E and the flying body G.

That is, the flight control section 93 can perform the maintaining control during the work performed by the work vehicle E such that the flight of the flying body G is controlled in a such a manner as to maintain the positional relationship between the work vehicle E and the flying body G. The transfer section K is configured to transfer the work-related article during the execution of the maintaining control.

For example, the flight control section 93 of the first flying body 5 illustrated in Fig. 2 is configured to perform the maintaining control based on positional information on the tractor 3 and positional information on the first flying body 5 during the work performed by the tractor 3. The throwing section 51 is configured to throw down the chemical agent during the execution of the maintaining control. Hereby, the first flying body 5 can supply the hopper 33 with the chemical agent while the tractor 3 is traveling and spraying the chemical agent.

### [Execution Determination Section]

As illustrated in Fig. 3, each flying body G includes an execution determination section 95. The execution determination section 95 determines an execution position or an execution timing for the transfer of the work-related article between the flying body G and the work vehicle E based on the work information acquired by the second communication section 91.

That is, the work assisting system A includes the execution determination section 95 configured to determine an execution position or an execution timing for the transfer of the work-related article between the flying body G and the work vehicle E based on the work information.

The execution determination section 95 may determine at which point in the farm the work-related article is to be transferred, for example.

The flight control section 93 controls the flight of the flying body G based on the determination made by the execution determination section 95. The transfer control section 94 controls the transfer section K based on the determination made by the execution determination section 95.

The execution determination section 95 can change a control mode between a plurality of modes. More specifically, the control mode of the execution determination section 95 is changeable between a first mode, a second mode, a third mode, a fourth mode, a fifth mode, and a sixth mode. What is prioritized in determining an execution position or an execution timing for the transfer of the work-related article varies depending on the control mode.

In a case where the execution determination section 95 is in the first mode, the execution determination section 95 determines the execution position or the execution timing so that the work performed by the work vehicle E is less delayed due to the transfer of the work-related article. In this case, for example, the execution position or the execution timing is determined so that the vehicle speed of the work vehicle E does not decelerate due to the transfer of the work-related article.

In a case where the execution determination section 95 is in the second mode, when a material is transferred from the flying body G to the work vehicle E, the execution determination section 95 determines the execution position or the execution timing so that the work vehicle E does not run out of the material. In this case, for example, the execution position or the execution timing is determined so that the material is immediately supplied at the point when the residual amount of the material in the work vehicle E goes below 50% of the maximum amount in the specification.

In a case where the execution determination section 95 is in the third mode, the execution determination section 95 determines the execution position or the execution timing so that the stability of the transfer of the work-related article is secured. In this case, the execution position or the execution timing is determined so that the transfer is performed at the time when the work vehicle E travels in a region where the surface of the farm is less bumpy, for example.

In a case where the execution determination section 95 is in the fourth mode, the execution determination section 95 determines the execution position or the execution timing so that the work-related article is transferred while the work vehicle E linearly moves.

In a case where the execution determination section 95 is in the fifth mode, the execution determination section 95 determines the execution position or the execution timing so that the work-related article is transferred while the work vehicle E travels at a low speed.

In a case where the execution determination section 95 is in the sixth mode, the execution determination section 95 determines the execution timing to be a timing at which a distance between the work vehicle E and a farm end where the flying body G waits becomes a predetermined distance or less. At this time, in a case where preparation in the flying body G for the transfer of the work-related article is finished, the execution determination section 95 calculates the predetermine distance based on a time required for the flying body G to reach the position of the work vehicle E after the flying body G starts flying. In a case where the preparation is not finished, the execution determination section 95 determines the predetermined distance based on a total time of a time required for the preparation and a time required for the flying body G to reach the position of the work vehicle E after the flying body G starts flying. Note that the "execution timing" herein may be a timing when preparation in the flying body G for the transfer of the work-related article is started before the flying body G takes off, may be a timing when the flying body G takes off, or may be a moment when the work-related article is actually moved between the flying body G and the work vehicle E. The "preparation" herein may be a work of loading the flying body G with the work-related article scheduled to be supplied to the work vehicle E, for example.

That is, the execution determination section 95 can determine the execution position or the execution timing so that the work performed by the work vehicle E is less delayed due to the transfer of the work-related article. In a case where the material as the work-related article is transferred from the flying body G to the work vehicle E, the execution determination section 95 can also determine the execution position or the execution timing so that the work vehicle E does not run out of the material. The execution determination section 95 can also determine the execution position or the execution timing so that the stability of the transfer of the work-related article is secured. The execution determination section 95 can also determine the execution position or the execution timing so that the work-related article is transferred while the work vehicle E linearly moves. The execution determination section 95 can also determine the execution position or the execution timing so that the work-related article is transferred while the work vehicle E travels at a low speed. The execution determination section 95 can also determine the execution timing to be a timing at which the distance between the work vehicle E and the farm end where the flying body G waits becomes a predetermined distance or less.

Note that pieces of information to be exchanged between the work vehicle E and the flying body G may be prioritized based on types of information, and the order of priority may be changed in response to the control mode of the execution determination section 95.

As illustrated in Fig. 3, the management computer 1 includes a mode switching section 13. The mode switching section 13 generates a mode switching command based on an operation input by a user, or the like, for example. The generated mode switching command is transmitted from the third communication section 11 to the second communication section 91. The flying body G switches the control mode of the execution determination section 95 in response to the received mode switching command.

### [Supply of Fuel to Fuel Tank]

As illustrated in Fig. 2, the second flying body 6 includes a refueling section 61 as the transfer section K. The refueling section 61 can store fuel such as gasoline. The flying apparatus H can transport the fuel such that the flying apparatus H flies with the fuel being stored in the refueling section 61.

The refueling section 61 includes a tubular member 63 and an opening-closing valve 64. The tubular member 63 is configured such that the fuel can pass through the tubular member 63.

That is, the refueling section 61 includes the tubular member 63. Note that the tubular member 63 may have a flexibility or may not have a flexibility. In a case where the tubular member 63 has a flexibility, the fuel can be transferred with the second flying body 6 being connected to the fuel tank 32 via the tubular member 63. Even if the positional relationship between the second flying body 6 and the fuel tank 32 changes to some extent during the transfer of the fuel, the tubular member 63 deforms, so that the second flying body 6 is easily kept connected to the fuel tank 32. Hereby, even if the positional relationship between the second flying body 6 and the fuel tank 32 changes to some extent during the transfer of the fuel, the transfer of the fuel is easily surely performed.

The tubular member 63 is configured to be insertable into a supply hole 32a provided on the top surface of the fuel tank 32. The opening-closing valve 64 is configured to be openable and closable by an electric motor or the like, for example. When the opening-closing valve 64 is in an open state, the fuel stored in the refueling section 61 is discharged downward through the tubular member 63. When the opening-closing valve 64 is in a closed state, the fuel stored in the refueling section 61 is not discharged. Note that the opening-closing valve 64 is controlled by the transfer control section 94 illustrated in Fig. 3.

As illustrated in Fig. 2, when the opening-closing valve 64 is brought into the open state with the tubular member 63 being inserted into the supply hole 32a, the fuel stored in the refueling section 61 is supplied to the fuel tank 32 through the tubular member 63.

That is, the refueling section 61 is configured to supply the fuel between the second flying body 6 and the fuel tank 32 through the tubular member 63.

The tubular member 63 and a plurality of opening and closing mechanisms 65 form a connection mechanism 66. As illustrated in Fig. 2, the connection mechanism 66 connects the fuel tank 32 to the refueling section 61.

That is, the work assisting system A includes the connection mechanism 66 configured to connect the tractor 3 to the refueling section 61.

The plurality of opening and closing mechanisms 65 is provided in a lower end portion of the tubular member 63. Each of the opening and closing mechanisms 65 may have a plate shape or a bar shape. Each of the opening and closing mechanisms 65 is configured to be vertically swingable by an electric motor, as illustrated in Fig. 2, for example.

When each of the opening and closing mechanisms 65 is at a horizontal position, an upward movement of the tubular member 63 inserted into the supply hole 32a is restricted. At this time, the connection mechanism 66 is in a locked state. Note that the locked state is a state where the tractor 3 (the work vehicle E) is kept connected to the refueling section 61 (the transfer section K).

When each of the opening and closing mechanisms 65 is at a vertical position, the upward movement of the tubular member 63 inserted into the supply hole 32a is allowed. At this time, the connection mechanism 66 is in an unlocked state. Note that the unlocked state is a state where the tractor 3 (the work vehicle E) is disconnectable from the refueling section 61 (the transfer section K).

As illustrated in Fig. 3, each flying body G includes a lock control section 96. The lock control section 96 controls vertical swinging of the plurality of opening and closing mechanisms 65. Hereby, the lock control section 96 can switch the connection mechanism 66 between the locked state and the unlocked state.

With the configuration described above, the connection mechanism 66 illustrated in Fig. 2 is changeable between the locked state, in which the tractor 3 (the work vehicle E) is kept connected to the refueling section 61 (the transfer section K), and the unlocked state, in which the tractor 3 (the work vehicle E) is disconnectable from the refueling section 61 (the transfer section K). The work assisting system A also includes the lock control section 96 configured to switch the connection mechanism 66 between the locked state and the unlocked state.

Note that the transfer section K is connected to the flying apparatus H in a detachable manner. The flying apparatus H is configured to replace the transfer section K connected to the flying apparatus H with a transfer section K of another type. For example, after the throwing section 51 is detached from the flying apparatus H of the first flying body 5, the refueling section 61 is connectable to the flying apparatus H.

### [Landing to Work Vehicle]

In order to achieve the transfer of the work-related article while the work vehicle E is traveling and performing the work, the flight control section 93 illustrated in Fig. 3 is configured to perform a vehicle body landing control based on the positional information on the work vehicle E and the positional information on the flying body G during the work performed by the work vehicle E. The vehicle body landing control is to control the flight of the flying body G in such a manner as to cause the flying body G to land on the work vehicle E.

That is, the flight control section 93 can control the flight of the flying body G in such a manner as to cause the flying body G to land on the work vehicle E, during the work performed by the work vehicle E. The transfer section K is configured to transfer the work-related article after the flying body G lands on the work vehicle E.

For example, the refueling section 61 of the second flying body 6 illustrated in Fig. 2 has a lower portion provided with leg portions 62. The second flying body 6 can land on the tractor 3 such that the bottom surfaces of the leg portions 62 come into contact with a flat portion of the tractor 3 (for example, the top surface of a bonnet, or the top surface of a roof).

The flight control section 93 of the second flying body 6 is configured to control the flight of the second flying body 6 based on the positional information on the tractor 3 and the positional information on the second flying body 6 during the work performed by the tractor 3 such that the second flying body 6 lands on the tractor 3. At this time, the flight control section 93 controls the flight of the second flying body 6 such that the tubular member 63 is inserted into the supply hole 32a. The refueling section 61 is configured to discharge the fuel downward after the second flying body 6 lands on the tractor 3. Hereby, the second flying body 6 can supply the fuel to the fuel tank 32 while the tractor 3 is traveling and spraying the chemical agent.

Note that the connection mechanism 66 is controlled in the locked state after the second flying body 6 lands on the tractor 3 but before the supply of the fuel to the fuel tank 32 is finished. When the supply of the fuel to the fuel tank 32 is finished, the connection mechanism 66 is switched from the locked state to the unlocked state.

### [Replacement of Battery and Supply of Seedling Mat]

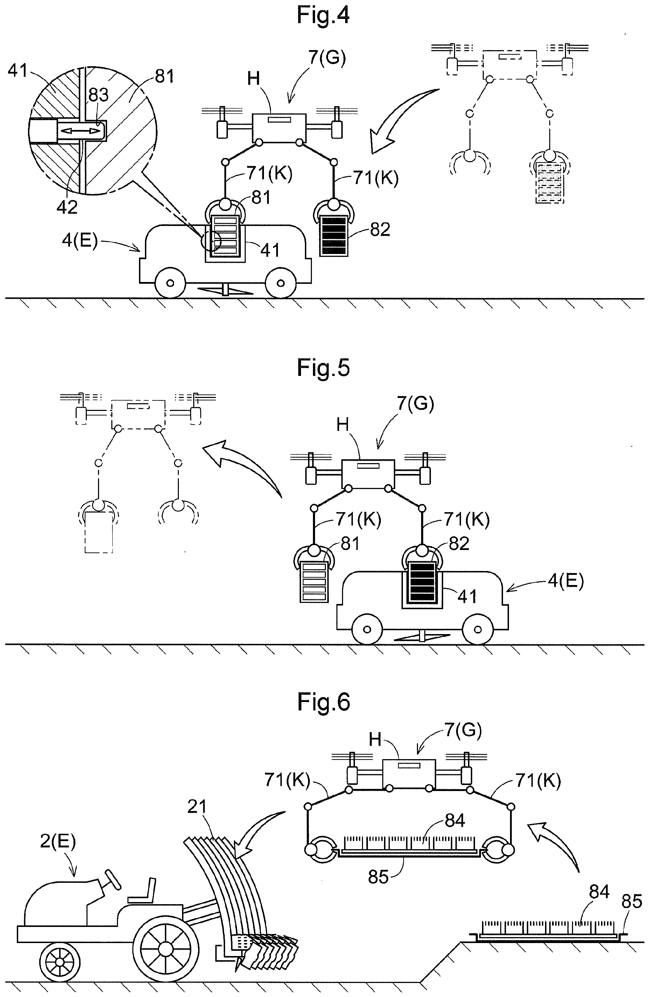

As illustrated in Fig. 4, an electric mower 4 as the work vehicle E includes a battery mounting section 41. A battery (corresponding to the "work-related article" according to the present invention) is mounted on the battery mounting section 41. The mower 4 can perform mowing by electric power supplied from the battery mounted on the battery mounting section 41 while the mower 4 is traveling.

That is, the mower 4 is configured to use the battery with the battery being attached to the mower 4. In Fig. 4, a first battery 81 (corresponding to the "work-related article" according to the present invention) as the battery is mounted on the battery mounting section 41.

As illustrated in FIG. 4, the transfer section K of the third flying body 7 includes a plurality of grippers 71. More specifically, the transfer section K of the third flying body 7 is constituted by two grippers 71. Each gripper 71 is a robot arm driven by an actuator (not illustrated). The actuator may be, for example, an electric motor or a hydraulic motor.

As illustrated in Fig. 4, the grippers 71 can grip the first battery 81 and a second battery 82 (corresponding to the "work-related article" according to the present invention). The first battery 81 and the second battery 82 are both batteries. The flying apparatus H can transport a battery such that the flying apparatus H flies with the battery being gripped by the gripper 71. The transfer section K of the third flying body 7 is configured to transfer batteries by two grippers 71.

For example, as illustrated in Figs. 4, 5, the third flying body 7 flies toward the mower 4 with the second battery 82 being gripped by one of the grippers 71. Then, the third flying body 7 causes the other one of the grippers 71 to grip and detach the first battery 81 mounted on the battery mounting section 41. The third flying body 7 causes the one of the grippers 71 to attach the second battery 82 to the battery mounting section 41. After that, the third flying body 7 flies away from the mower 4 with the first battery 81 being gripped by the other one of the grippers 71.

That is, the transfer section K of the third flying body 7 is configured to detach the first battery 81 as a battery attached to the mower 4 and attach the second battery 82 as another battery to the mower 4, so that the first battery 81 and the second battery 82 are transferred.

With this configuration, the third flying body 7 can replace the battery of the mower 4. For example, in a case where the first battery 81 has a relatively small charging rate, and the second battery 82 has a relatively large charging rate, when the first battery 81 is replaced with the second battery 82, it is possible to extend a time during which the mower 4 can continue its work.

Note that the present invention is not limited to this. For example, the work vehicle E may include a reservoir in which the fuel is retained, and the transfer section K may be configured to supply the fuel such that the transfer section K detaches the reservoir from the work vehicle E and attaches another reservoir (preferably, a reservoir fully filled with the fuel) to the work vehicle E in a similar manner to the battery replacement described above. In this case, it is possible to extend the time during which the work vehicle E can continue its work.

Alternatively, for example, the work vehicle E configured to harvest crops may include a reservoir in which the crops are retained, and the transfer section K may be configured to collect the crops such that the transfer section K detaches the reservoir from the work vehicle E and attaches another reservoir (preferably, an empty reservoir) to the work vehicle E in a similar manner to the battery replacement described above. In this case, it is possible to extend the time during which the work vehicle E can continue its work.

That is, the transfer section K may be configured to, in a case where the work vehicle E includes a reservoir configured to retain the work-related article, transfer the work-related article such that the transfer section K detaches the reservoir from the work vehicle E and attaches another reservoir to the work vehicle E.

Part of or all the crops retained in the reservoir may be moved to the flying body G through the transfer section K. In such an embodiment, it is preferable that the flying body G include an empty reservoir. For example, the reservoir of the work vehicle E may include a discharge port, the reservoir of the flying body G may include a supply port, and the discharge port may be connected to the supply port via the transfer section K. In this case, when the flying body G flies so that the position of the supply port is located lower than the position of the discharge port, the flying body G can collect the crops by gravity. In this case, the flying body G may include a load detection sensor configured to detect a load caused by the collected crops. With use of the load detection sensor, the collection of the crops can be controlled such that the load caused by the collected crops becomes equal to or lower than an upper limit load allowable for the flying body G to fly.

As illustrated in Fig. 6, a rice transplanter 2 as the work vehicle E includes a seedling base 21. The third flying body 7 can grip a support member 85 supporting one or more seedling mats 84 (corresponding to the "work-related article" according to the present invention) by two grippers 71. The flying apparatus H can transport the one or more seedling mats 84 such that the flying apparatus H flies with the support member 85 being gripped by the grippers 71. Note that the support member 85 may be a scoop board or may be a seedling box, for example. The transfer section K of the third flying body 7 is configured to supply the seedling mat 84 by the two grippers 71.

In the example illustrated in Fig. 6, the support member 85 supporting a plurality of seedling mats 84 is put on a ridge between rice fields. The third flying body 7 causes the two grippers 71 to grip the support member 85. Subsequently, the third flying body 7 flies toward the seedling base 21 of the rice transplanter 2 with the support member 85 being gripped by the two grippers 71. The third flying body 7 inclines the support member 85 to slide the plurality of seedling mats 84, so that the seedling base 21 is supplied with the plurality of seedling mats 84.

Note that, in this case, it is preferable that the number of rows of the seedling mats 84 that can be put on the seedling base 21 be the same as the number of rows of the seedling mats 84 supported by the support member 85.

However, the present invention is not limited to this. For example, the grippers 71 may be able to directly grip one or more seedling mats 84.

The transfer section K may be also able to supply the seedling base 21 with one seedling mat 84. Hereby, in a case where the rice transplanter 2 can change the number of planting rows, it is possible to locally supply the seedling mat 84 to a portion of the seedling base 21 which portion has a relatively small number of seedling mats 84.

The gripper 71 may be also able to grip an article other than the above-described articles targeted for gripping. For example, the grippers 71 may be able to grip a wall material for construction, a pipe, or the like, or may be able to grip a storage member for storing a work-related articles such as a fertilizer, for example.

That is, the transfer section K of the third flying body 7 includes the gripper 71 driven by an actuator and configured to grip the work-related article, the support member 85 supporting the work-related article, or the storage member configured to store the work-related article, and the transfer section K is configured to transfer the work-related article by the gripper 71.

Note that the third flying body 7 is configured to transfer the work-related article such as the battery or the seedling mat 84 while the work vehicle E such as the mower 4 or the rice transplanter 2 is traveling and performing its work. At this time, the flight control section 93 of the third flying body 7 performs the above-mentioned maintaining control. However, the present invention is not limited to this, and the flight control section 93 of the third flying body 7 may perform the above-mentioned vehicle body landing control instead of the maintaining control.

The work assisting system A in the present embodiment also includes a weight value acquisition section (not illustrated) configured to acquire a weight value indicative of the weight of the work-related article before the work-related article is transferred. The weight value acquisition section may be provided for the work vehicle E or may be provided for the flying body G. The weight value acquisition section may be a load sensor such as a load cell, for example.

In a case where the weight value is larger than a predetermined threshold, the transfer section K may be configured to transfer the work-related article by an amount equal to or less than an amount corresponding to the threshold, out of the work-related article to be transferred. Although the threshold is not limited in particular, the threshold may be a value corresponding to a maximum load determined in the specification of the transfer section K or the flying body G.

For example, in the example illustrated in Fig. 6, the weight of the support member 85 supporting the plurality of seedling mats 84 may be acquired by the weight value acquisition section provided for the flying body G. In this case, the weight acquired by the weight value acquisition section is a total weight of the plurality of seedling mats 84 and the support member 85 and corresponds to the above-mentioned "weight value."

At this time, in a case where the weight acquired by the weight value acquisition section is larger than the predetermined threshold, the third flying body 7 controls the two grippers 71 such that the seedling base 21 is supplied with the seedling mat 84 by an amount equal to or less than an amount corresponding to the threshold or less. At this time, for example, the third flying body 7 stops transporting the support member 85 supporting the plurality of seedling mats 84 to the seedling base 21 and flies toward the seedling base 21 with the grippers 71 directly gripping the seedling mat 84 (for example, one seedling mat 84) by the amount equal to or less than the amount corresponding to the threshold, and then, the third flying body 7 supplies the seedling base 21 with the seedling mat 84.

The work assisting system A also includes a flying body determination section (not illustrated) configured to determine a flying body G suitable for the transfer of the work-related article from among the plurality of flying bodies G based on a weight value acquired by the weight value acquisition section. The flying body determination section may be provided for the management computer 1, may be provided for the work vehicle E, or may be provided for the flying body G. The flying body determination section may be a physical device such as a microcomputer or may be a functional section in software. The flying body determination section may be configured to transmit an assist command to the second communication section 91 of the flying body G determined by the flying body determination section.

For example, in the example illustrated in Fig. 6, in a case where the weight value acquisition section of the third flying body 7 acquires the weight of the support member 85 supporting the plurality of seedling mats 84, the flying body determination section determines whether or not the weight is larger than the predetermined threshold. Although the threshold is not limited in particular, the threshold may be a value corresponding to a maximum load determined in the specification of the third flying body 7 or the transfer section K of the third flying body 7. In a case where the weight is equal to or less than the threshold, the flying body determination section determines the third flying body 7 as the flying body G suitable for supplying the seedling base 21 with the seedling mat 84.

In a case where the weight is larger than the predetermined threshold, the flying body determination section determines a flying body G different from the third flying body 7 (preferably, the flying body G with a payload larger than that of the third flying body 7) as the flying body G suitable for supplying the seedling base 21 with the seedling mat 84. In this case, the flying body determination section orders the third flying body 7 to stop the supply of the seedling mat 84.

In a case where the weight value acquisition section is provided for the work vehicle E, it is possible to achieve a configuration in which the flying body determination section performs determination such that only a flying body G that can tolerate the weight of the work-related article which weight corresponds to the weight value acquired by the weight value acquisition section heads for assisting the work vehicle E. In this case, it is possible to prevent such a situation that the transfer of the work-related article is canceled due to the weight of the work-related article.

### [Stopper]

As illustrated in Fig. 4, the first battery 81 has an outer wall portion having a recessed portion 83. Although not illustrated herein, the second battery 82 also has an outer wall portion having the recessed portion 83.

The battery mounting section 41 includes a stopper 42 at a portion facing the recessed portion 83. The stopper 42 is configured to be horizontally advanceable and retractable by an electric motor or the like, as indicated by an arrow in Fig. 4, for example.

When the stopper 42 projects with the first battery 81 or the second battery 82 being mounted on the battery mounting section 41, the stopper 42 enters the recessed portion 83. At this time, the first battery 81 or the second battery 82 mounted on the battery mounting section 41 is not detachable from the battery mounting section 41. That is, at this time, the mower 4 is in a state where detachment of the first battery 81 or the second battery 82 is not performable. In the following description, a state where the transfer of the work-related article is not performable as such is referred to a "first state."

When the stopper 42 retracts with the first battery 81 or the second battery 82 being mounted on the battery mounting section 41, the stopper 42 does not enter the recessed portion 83. At this time, the first battery 81 or the second battery 82 mounted on the battery mounting section 41 is detachable from the battery mounting section 41. That is, at this time, the mower 4 is in a state where detachment of the first battery 81 or the second battery 82 is performable. In the following description, a state where the transfer of the work-related article is performable as such is referred to a "second state."

As such, the mower 4 is configured to be changeable between the first state, in which the transfer of the battery as the work-related article is not performable, and the second state, in which the transfer of the battery as the work-related article is performable. However, the present invention is not limited to this, and both the mower 4 and the transfer section K, or only the transfer section K may be configured to be changeable between the first state and the second state.

That is, at least either one of the work vehicle E and the transfer section K is configured to be changeable between the first state, in which the transfer of the work-related article is not performable, and the second state, in which the transfer of the work-related article is performable.

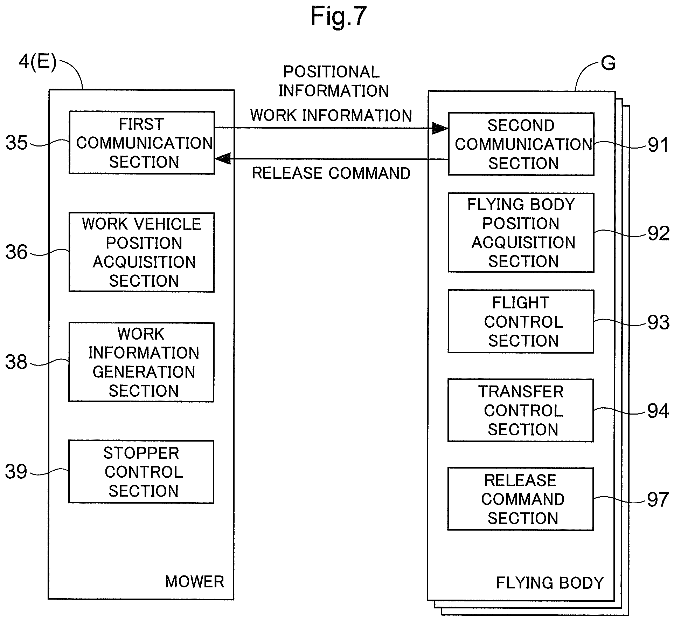

As illustrated in Fig. 7, the mower 4 includes a stopper control section 39. The stopper control section 39 controls advancing and retracting of the stopper 42. Hereby, the stopper control section 39 performs a state change between the first state and the second state.

That is, the work assisting system A includes the stopper control section 39 configured to perform a state change between the first state and the second state.

As illustrated in Fig. 7, each flying body G includes a release command section 97. The release command section 97 generates a release command to order a state change from the first state to the second state. The generated release command is transmitted from the second communication section 91 to the first communication section 35 of the mower 4. When the first communication section 35 of the mower 4 receives the release command, the stopper control section 39 of the mower 4 controls the stopper 42 in a retracting state. Hereby, the state change from the first state to the second state is performed.

For example, as illustrated in Figs. 4, 5, in a case where the third flying body 7 replaces the battery of the mower 4, positional information on the mower 4 which positional information is acquired by the work vehicle position acquisition section 36, and work information on the mower 4 which work information is generated by the work information generation section 38 are transmitted from the first communication section 35 to the second communication section 91, as illustrated in Fig. 7.

Then, the third flying body 7 flies toward the mower 4 through control by the flight control section 93 based on positional information on the third flying body 7 and the positional information on the mower 4. The above-mentioned release command is transmitted to the mower 4 before the third flying body 7 reaches the position of the mower 4. Hereby, the stopper control section 39 performs the state change from the first state to the second state while the third flying body 7 is flying toward the mower 4 to transfer the battery. In other words, the stopper control section 39 performs the state change from the first state to the second state before the third flying body 7 reaches the position of the mower 4.

After that, when the third flying body 7 reaches the position of the mower 4, the third flying body 7 replaces the battery through control by the transfer control section 94 based on the work information on the mower 4. Note that, in this case, the transfer control section 94 controls the two grippers 71. In addition, in this case, the work information may be information indicative of the type of a battery suitable for the mower 4, and the third flying body 7 may be configured transport a suitable battery to the mower 4 based on the information, for example.

Note that each element (each element included in the management computer 1, the work vehicle E, or the flying body G) such as the first communication section 35 or the work vehicle position acquisition section 36 illustrated in Figs. 3, 7 may be a physical device such as a microcomputer or may be a functional section in software.

In Fig. 3, the release command section 97 provided for each flying body G is not illustrated. In Fig. 7, the execution determination section 95 and the lock control section 96 provided for each flying body G are not illustrated.

With the configuration described above, the flying body G can approach the work vehicle E while transporting the work-related article and transfer the work-related article. Hereby, the flying body G can easily transfer the work-related article while the work vehicle E continues its work. As a result, it is possible to restrain a decrease in working efficiency due to the transfer of the work-related article.

That is, with the configuration described above, it is possible to achieve the work assisting system A that can easily restrain a decrease in working efficiency due to the transfer of a work-related article.

### [Other Embodiments]

(1) The hopper 33 may include a cover covering the opening 33a, and the cover may be configured to be changeable between a closed state and an open state. In this case, the closed state corresponds to the above-mentioned "first state," and the open state corresponds to the above-mentioned "second state."
(2) The transfer section K may be configured to attach and detach a component related to the work performed by the work vehicle E. Hereby, component replacement and maintenance of the work vehicle E can be performed. In this case, the component corresponds to the "work-related article" according to the present invention. Further, the detachment and the attachment correspond to the "transfer" according to the present invention.
(3) The flight control section 93 may be configured not to be able to perform the maintaining control.
(4) The flight control section 93 may be configured not to be able to perform the vehicle body landing control.
(5) The work assisting system A may include only one flying body G. Even in a case where the work assisting system A includes only one flying body G, when the transfer section K is replaced with a transfer section K of another type, a work-related article of another type can be transferred. Hereby, the work assisting system A that can transfer various work-related articles is easily achieved.
(6) Part of or all elements included in the management computer 1 may be included in the flying body G or may be included in the work vehicle E. That is, the work assisting system A may not include the management computer 1.
(7) The flying body G may be configured to place the work-related article to a predetermined spot by the transfer section K. In this case, the placement corresponds to the "transfer" according to the present invention. In this configuration, in a case where the work vehicle E passes the spot or its vicinity in the middle of the work, the work vehicle E can be easily supplied with the work-related article.
(8) The flying body G may be configured to collect the work-related article placed in the predetermined spot by the transfer section K. In this case, the collection corresponds to the "transfer" according to the present invention.
(9) The transfer section K may collect the chemical agent from the work vehicle E. In this case, the collection corresponds to the "transfer" according to the present invention. After the chemical agent is collected, the transfer section K may supply a chemical agent of another type. In this case, the supply corresponds to the "transfer" according to the present invention.
(10) The flying body G may include a detection section (for example, a camera or the like) configured to acquire information indicative of the residual amount of the material by detecting the residual amount of the material (for example, the seedling mat 84) in the work vehicle E.
(11) The work assisting system A may be configured to assist work performed by a work vehicle E of a type other than the types described in the above embodiment. For example, the work assisting system A may assist the work performed by the work vehicle E such as a combine harvester or a construction work vehicle.

The configurations described in the embodiments (including the alternative embodiments; the same applies hereinafter) can be applied in combination with configurations of other embodiments as long as no inconsistency occurs. Further, the embodiments disclosed in the present specification are just examples. The embodiments of the present invention are not limited to them, and various modifications can be made within a range that does not deviate from the object of the present invention.

### Industrial Applicability

The present invention is applicable to a work assisting system for assisting with work performed by a work vehicle.

### Description of Reference Numerals

11: third communication section (acquisition section)
12: determination section
32: fuel tank (reservoir)
33: hopper (reservoir)
33a: opening
63: tubular member
71: gripper
81: first battery (work-related article)
82: second battery (work-related article)
84: seedling mat (work-related article)
85: support member
93: flight control section
A: work assisting system
E: work vehicle
G: flying body
H: flying apparatus
K: transfer section

## Claims

1. A work assisting system for assisting with work performed by a work vehicle, the work assisting system comprising:
at least one flying body including
a flying apparatus capable of flying and transporting a work-related article related to the work performed by the work vehicle, and
a transfer section connected to the flying apparatus,
the transfer section being configured to transfer the work-related article between the at least one flying body and the work vehicle.

2. The work assisting system according to claim 1, further comprising:
a flight control section configured to control flight of the at least one flying body, wherein
the flight control section is able to perform a maintaining control to control the flight of the at least one flying body in such a manner as to maintain a positional relationship between the work vehicle and the at least one flying body, during the work performed by the work vehicle, and
the transfer section is configured to transfer the work-related article during execution of the maintaining control.

3. The work assisting system according to claim 1 or 2, further comprising:
a flight control section configured to control flight of the at least one flying body, wherein
the flight control section is able to control the flight of the at least one flying body in such a manner as to cause the at least one flying body to land on the work vehicle, during the work performed by the work vehicle, and
the transfer section is configured to transfer the work-related article after the at least one flying body lands on the work vehicle.

4. The work assisting system according to any one of claims 1 to 3, wherein
the work vehicle includes a reservoir configured to retain the work-related article,
the reservoir has an opening facing upward, and
the transfer section is configured to supply the reservoir with the work-related article from the at least one flying body by throwing down the work-related article to the opening from above the opening.

5. The work assisting system according to any one of claims 1 to 3, wherein
the work vehicle includes a reservoir configured to retain the work-related article,
the transfer section includes a tubular member,
the tubular member allows the work-related article to pass through the tubular member, and
the transfer section is configured to transfer the work-related article between the at least one flying body and the reservoir through the tubular member.

6. The work assisting system according to any one of claims 1 to 3, wherein
the transfer section includes a gripper driven by an actuator and configured to grip the work-related article, a support member supporting the work-related article, or a storage member configured to store the work-related article, and
the transfer section is configured to transfer the work-related article by the gripper.

7. The work assisting system according to any one of claims 1 to 3, wherein
the work vehicle is configured to use the work-related article attached to the work vehicle, and
the transfer section is configured to transfer the work-related article in such a manner as to detach the work-related article attached to the work vehicle and to attach another work-related article to the work vehicle.

8. The work assisting system according to any one of claims 1 to 3, wherein
the work vehicle includes a reservoir configured to retain the work-related article, and
the transfer section is configured to transfer the work-related article in such a manner as to detach the reservoir from the work vehicle and to attach another reservoir to the work vehicle.

9. The work assisting system according to any one of claims 1 to 8, further comprising:
a weight value acquisition section configured to acquire a weight value indicative of a weight of the work-related article before the work-related article is transferred, wherein
the transfer section is configured to, in a case where the weight value is larger than a predetermined threshold, transfer the work-related article by an amount equal to or less than an amount corresponding to the threshold, out of the work-related article before the transfer.

10. The work assisting system according to any one of claims 1 to 9, wherein
the at least one flying body includes a plurality of flying bodies, and
the work assisting system further comprises
a weight value acquisition section configured to acquire a weight value indicative of a weight of the work-related article before the work-related article is transferred, and
a flying body determination section configured to determine a flying body suitable for the transfer of the work-related article from among the plurality of flying bodies based on the weight value.

11. The work assisting system according to any one of claims 1 to 10, wherein
the transfer section is connected to the flying apparatus in such a manner as to be detachable from the flying apparatus, and
the flying apparatus is configured to replace the transfer section connected to the flying apparatus with a transfer section of another type.

12. The work assisting system according to any one of claims 1 to 11, wherein
the at least one flying body includes a plurality of flying bodies including respective transfer sections of different types, and
the work assisting system further comprises:
an acquisition section configured to acquire a requested assist detail; and
a determination section configured to determine a flying body suitable for the transfer of the work-related article from among the plurality of flying bodies based on an acquisition result acquired by the acquisition section.
